# EUROPEAN PATENT APPLICATION

(11) **EP 4 589 465 A1**
(43) Date of publication of application: **23.07.2025**
(21) Application number: 25151482.4
(22) Date of filing: 13.01.2025
(51) Int. Cl.: G06F 40/103, G06F 40/166, G06F 40/253, G06F 40/56

(54) **GENERATIVE NEURAL NETWORK MODEL DOCUMENT MODIFICATION**

(30) Priority: 18.01.2024 US 202418416690
(71) Applicant: Microsoft Technology Licensing, LLC, Redmond, WA 98052 (US)
(72) Inventor: RAMOS, GONZALO A., Redmond, 98052 (US); SUH, JIN A, Redmond, 98052 (US); AMORES FERNANDEZ, JUDITH, Redmond, 98052 (US); CZERWINSKI, Mary P., Redmond, 98052 (US); PALANI, SRISHTI, Redmond, 98052 (US)
(74) Representative: CMS Cameron McKenna Nabarro Olswang LLP

(57) **Abstract**

A method of modifying a document is provided. A first user input is received from a user via an editing window of a graphical user interface. The first user input represents a request to a generative neural network model for drafting assistance with the document. The editing window displays content of the document during an editing session of the document for the user. An output generated by the generative neural network model based on the first user input and the content of the document is asynchronously obtained while maintaining the editing session. The content of the document is modified during the editing session to include the output generated by the generative neural network model. The modified content is caused to be displayed within the editing window during the editing session.

## Description

### BACKGROUND

The emergence of Large Language Models (LLMs) is extending machine capabilities, even in realms like creativity once considered exclusive to humans. Although creative individuals may be excited to integrate LLMs into their creative process, they face various usability and functional challenges. A first challenge is articulating creative goals to the LLM, requiring a user to have knowledge and experience with creating prompts for the LLM to follow. A second challenge is data and document management. Using an LLM as a standalone service, such as a chat service, may require the user to work across a fragmented ecosystem of tools, forcing the user to devote energy to managing which tools have which data and documents. A third challenge is a lack of memory across prompts or sessions with the LLM, which reduces consistency in outputs from the LLM.

It is with respect to these and other general considerations that embodiments have been described. Also, although relatively specific problems have been discussed, it should be understood that the embodiments should not be limited to solving the specific problems identified in the background.

### SUMMARY

Aspects of the present disclosure are directed to modifying documents using a generative neural network model.

In an aspect, a method of modifying a document is provided. The method includes receiving a first user input from a user via an editing window of a graphical user interface. The first user input represents a request to a generative neural network model for drafting assistance with the document. The editing window displays content of the document during an editing session of the document for the user. The method further includes obtaining, asynchronously while maintaining the editing session, an output generated by the generative neural network model based on the first user input and the content of the document. The method also includes modifying the content of the document during the editing session to include the output generated by the generative neural network model and causing the modified content to be displayed within the editing window during the editing session.

In another aspect, a computing device for modifying a document is provided. The computing device comprises a processor and a non-transitory computer-readable memory, where the processor is configured to carry out instructions from the memory that configure the computing device to: receive a first user input from a user via an editing window of a graphical user interface, wherein: the first user input represents a request to a generative neural network model for drafting assistance with the document, the editing window displays content of the document during an editing session of the document for the user; obtain, asynchronously while maintaining the editing session, an output generated by the generative neural network model based on the first user input and the content of the document; modify the content of the document during the editing session to include the output generated by the generative neural network model; and cause the modified content to be displayed within the editing window during the editing session.

In yet another aspect, a method of modifying a document is provided. The method includes receiving a first user input from a user via an editing window of a graphical user interface, where the first user input represents a request to a generative neural network model for drafting assistance with the document, and the editing window displays content of the document during an editing session of the document for the user. The method also includes selecting a textual context from a plurality of textual contexts, wherein each of the plurality of textual contexts is a description in a natural language format of a different simulated perspective for output generation by the generative neural network model. The method further includes obtaining an output generated by the generative neural network model based on the content of the document and the selected textual context, modifying the content of the document during the editing session to include the output generated by the generative neural network model, and causing the modified content to be displayed within the editing window during the editing session.

This summary is provided to introduce a selection of concepts in a simplified form that are further described below in the Detailed Description. This summary is not intended to identify key features or essential features of the claimed subject matter, nor is it intended to be used to limit the scope of the claimed subject matter.

### BRIEF DESCRIPTION OF THE DRAWINGS/FIGURES

Non-limiting and non-exhaustive examples are described with reference to the following Figures.
Fig. 1 shows a block diagram of an example system for document modification with assistance from a generative neural network model, according to an aspect.
Fig. 2 shows a diagram of an example graphical user interface provided by the system of Fig. 1 for textual context generation, according to an example aspect.
Fig. 3 shows a diagram of an example graphical user interface provided by the system of Fig. 1 for document modification, according to an example embodiment.
Fig. 4 shows a diagram of an example graphical user interface provided by the system of Fig. 1 for inline interaction with the generative neural network model, according to an aspect.
Fig. 5 shows a diagram of an example graphical user interface provided by the system of Fig. 1 for document modification, according to an aspect.
Fig. 6 shows a flowchart of an example method of modifying a document, according to an aspect.
Fig. 7 shows a flowchart of another example method of modifying a document, according to an aspect.
Fig. 8 is a block diagram illustrating example physical components of a computing device with which aspects of the disclosure may be practiced.
Fig. 9 is a simplified block diagram of a computing device with which aspects of the present disclosure may be practiced.

### DETAILED DESCRIPTION

In the following detailed description, references are made to the accompanying drawings that form a part hereof, and in which are shown by way of illustrations specific embodiments or examples. These aspects may be combined, other aspects may be utilized, and structural changes may be made without departing from the present disclosure. Embodiments may be practiced as methods, systems, or devices. Accordingly, embodiments may take the form of a hardware implementation, an entirely software implementation, or an implementation combining software and hardware aspects. The following detailed description is therefore not to be taken in a limiting sense, and the scope of the present disclosure is defined by the appended claims and their equivalents.

The present disclosure describes various aspects of a document modification system having a generative neural network model. The system provides an improved graphical user interface that reduces an amount of time needed to generate and modify a document while generating an output using one or more different, user-selected textual contexts or simulated perspectives. Since generative neural network models often require tens of seconds or even minutes of generation time to provide an output, the system allows for a user to edit a first portion of a document in parallel with generation of a second portion of the document by the generative neural network model. In other words, the user may continue an editing session of the document without having to wait during the generation time. The system also provides improved data and document management by using an intermediary for interfacing between the graphical user interface and the generative neural network model. For example, the intermediary stores context for content within a document and textual contexts that describe textual styles or simulated perspectives for output generation by the generative neural network model when generating additional content. Accordingly, the user can more easily view, understand, and control which contexts are used by the generative neural network model, and manage those same contexts. Moreover, the system provides an improved interface for drafting assistance with a document, including management of a creative process for drafting and revising the document.

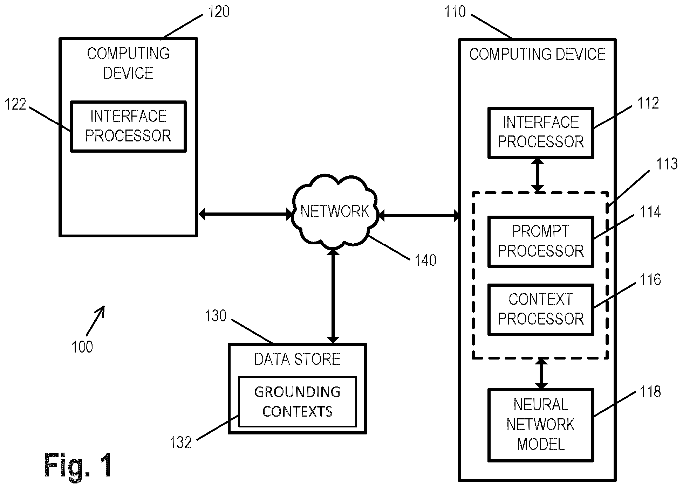

This and many further embodiments for a computing device are described herein. For instance, Fig. 1 shows a block diagram of an example system 100 for document modification with assistance from a generative neural network model, according to an aspect. The system 100 comprises a computing device 110, a computing device 120, and a data store 130. A network 140 communicatively couples the computing device 110, the computing device 120, and the data store 130. The network 140 may comprise one or more networks such as local area networks (LANs), wide area networks (WANs), enterprise networks, the Internet, etc., and may include one or more of wired, wireless, and/or optical portions.

The computing device 110 comprises an interface processor 112, an intermediary 113 having a prompt processor 114 and context processor 116, and a generative neural network model (GNNM) 118. The computing device 110 may be any suitable type of computing device, including a desktop computer, PC (personal computer), smartphone, tablet, or other computing device. In other examples, the computing device 110 may be a server, distributed computing platform, or cloud platform device. The computing device 110 may be configured to execute one or more software applications (or "applications") and/or services and/or manage hardware resources (e.g., processors, memory, etc.), which may be utilized by users of the computing device 110.

The interface processor 112 is configured to generate a graphical user interface (GUI) 200 for displaying data to a user and receiving inputs from the user. Generally, the GUI 200 shows content in windows, provides user interface controls (e.g., buttons, drop-down menus, etc.), and receives user inputs (e.g., typed text, mouse clicks, etc.) corresponding to user interactions with the GUI 200. In some examples, the interface processor 112 uses or incorporates a suitable voice to text conversion module (not shown) for voice capture, allowing the user to provide spoken commands as user inputs. In some examples, the interface processor 112 processes the user inputs (e.g., converting an index of a drop-down box into plain text, providing formatting, converting multiple inputs into a data structure, etc.) and provides the processed user inputs to the intermediary 113. The interface processor 112 may be implemented as a web browser, software executable, app, or other suitable GUI tool.

The intermediary 113 is configured to communicate with the interface processor 112 and the GNNM 118, for example, using one or more suitable application programming interfaces (not shown). Generally, the intermediary 113 processes inputs received by the interface processor 112 and communicates with the GNNM 118 to obtain an output generated by the GNNM 118. For example, the intermediary 113 may generate prompts for the GNNM 118 based on the user inputs and provide a corresponding output to the interface processor 112. In this way, the user does not need to have experience with prompt engineering for obtaining an output from the GNNM 118. Moreover, the intermediary 113 may provide at least some insulation between the interface processor 112 and the GNNM 118, so that when changes to the GNNM 118 are made, such as upgrades, new versions, new weights, different models, and/or additional models, corresponding changes to the interface processor 112 are either not needed or are reduced in complexity.

As described above, the intermediary 113 comprises the prompt processor 114 and the context processor 116. The prompt processor 114 is configured to generate prompts to be provided as inputs to the GNNM 118. Generally, the prompt processor 114 generates the prompts based on the user inputs from the interface processor 112. In some examples, the prompt processor 114 generates the prompts based on the user inputs and also one or more grounding contexts. Advantageously, the interface processor 112 and the intermediary 113 (i.e., the prompt processor 114 and/or the context processor 116) are configured to allow the user to more easily view, understand, and control which contexts are used by the GNNM 118, and manage those same contexts via the GUI 200. Specifically, the user can view the contexts, modify the contexts, and select which contexts should be used for a particular document or request to the GNNM 118. Examples of grounding contexts include objective information such as documents, articles, website content, or other generally factual or objective sources, and may also include subjective information, such as text provided by the user that describes their current mood, design preferences, writing style preferences, or other subjective information. In some examples, the prompt processor 114 and/or the context processor 116 operate asynchronously relative to the interface processor 112, for example, to allow the user to interact with the GUI 200 while prompts are generated and sent to the GNNM 118, outputs are generated by the GNNM 118, and/or the outputs are processed.

In some examples, the prompt processor 114 may further process outputs from the GNNM 118 before providing the output to the interface processor 112. In one example, the prompt processor 114 performs formatting changes to the output, such as font changes, display styles, etc. Formatting changes may be performed by inserting markup language (e.g., XML, HTML) inline into the output, or by generating a suitable data structure that identifies formatting changes to be applied by the interface processor 112. In another example, the prompt processor 114 combines the output from the GNNM 118 with other data or information, such as previously obtained outputs from the GNNM 118, outputs from a different instance of the GNNM 118, portions of grounding contexts 214 (described below), or other suitable information. In one such example, the prompt processor 114 combines a text output from an LLM with an image generated by a StyleGAN and provides the combined text output and image to the interface processor 112.

In some aspects, the grounding contexts comprises a document context that describes facts or information on which a document being drafted by the user should be based. The grounding contexts may also include the documents being draft themselves. The document context may be written in a natural language format and include a problem description for the document (e.g., why the document is being drafted), goals for the document (e.g., appearance, style, length, organization), milestones for development of the document (e.g., steps to be followed when drafting and revising the document), or other suitable information. In some examples, the prompt processor 114 is configured to generate a document context prompt that causes the GNNM 118 to generate all or a portion of the document context. For example, the user may provide a user input with a high level goal of "Come up with a novel concept to improve existing mental wellness apps," the prompt processor 114 may generate a suitable document context prompt that causes the GNNM 118 to generate a timeline of milestones for brainstorming activities that identify concepts, analysis of those concepts, converging activities to select and fine-tune the concepts, drafting the document using the fine-tuned concepts, and review of the document. In some examples, the user may provide a user input that causes the prompt processor 114 to generate a suitable milestone prompt to cause the GNNM 118 to generate an output according to one or more of the milestones.

In some aspects, the grounding contexts comprises a user context that is specific to a user drafting a document. The user context may include factual information that describes the user's education, background, experiences. The user context may also include subjective information as described above (e.g., their current mood, design preferences, writing style preferences).

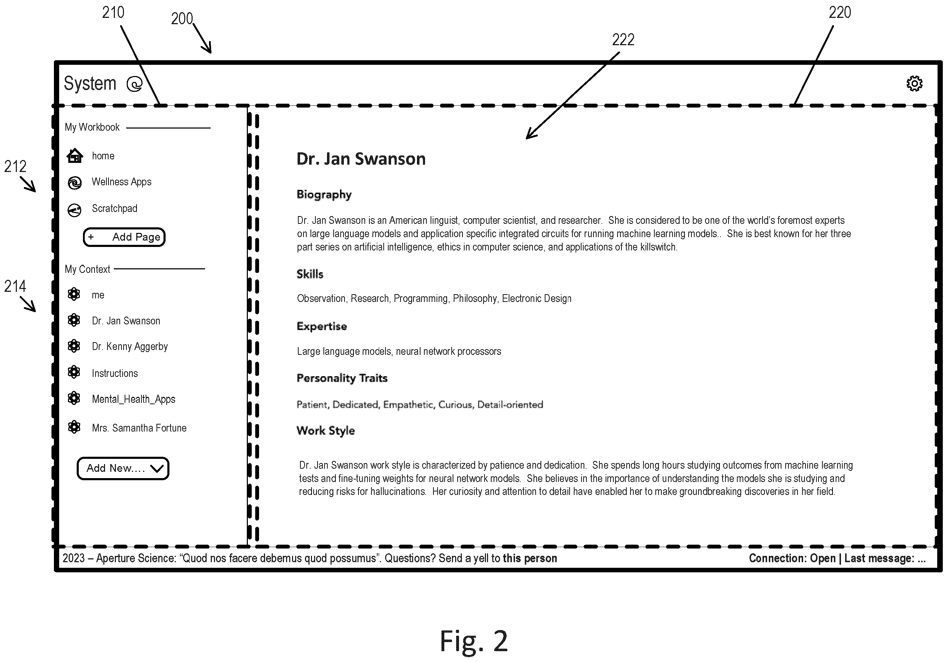

Another example of a grounding context is a textual context, which is a description in a natural language format of a textual style or simulated perspective for output generation by the GNNM 118. In some examples, the textual context is a representation of a person having a particular education, experience, skills, expertise, personality traits, work style, communication style, writing style, preferences, or other characteristics. A description of the education, experience, and skills within a textual context for an individual may be used to restrict or expand a body of knowledge on which the output of the GNNM 118 should rely. Accordingly, an output generated by the GNNM 118 using a textual context may appear to have been written from a simulated perspective as described in the textual context. For example, a textual context for a post-doctoral researcher may include citations to a graduate level thesis, while a different textual context for a freshman college student may be restricted to published textbooks for undergraduate classes. The person represented by a textual context may be entirely fictional or based at least in part on an actual person. The textual context may be formatted as a user profile, such as the profile 222 shown in Fig. 2. In other examples, the textual context is formatted in a data structure (e.g., JSON, XML, etc.) to have a reduced size, but is displayed for editing by the user in a profile format as shown in Fig. 2 for improved readability and modification by the user.

The context processor 116 is configured to generate textual contexts for use by the prompt processor 114. In some examples, the context processor 116 generates a textual context based on user inputs received from the user via the GUI 200. In one example, the user may enter a text description of a person, describing the person's education, experience, etc. In another example, the user may enter a name of a person (e.g., historical figure) or a description of the person (e.g., "a famous entrepreneur") and request that the context processor 116 provide the user input to the GNNM 118 to generate the textual context. When generating a textual context, the context processor 116 may provide one or more textual context templates that define a structure and/or content of the textual context. In yet another example, the context processor 116 may use the document context of a document or other grounding contexts 132 to identify a suitable expert person and use the GNNM 118 to generate a suitable textual context.

Although the prompt processor 114 and the context processor 116 are shown as separate components contained within the intermediary 113, the prompt processor 114 and the context processor 116 may be provided on separate computing devices (e.g., the computing device 120 or another instance of the computing device 110) in some examples. In still other examples, the prompt processor 114 and the context processor 116 are combined into a single module or executable.

In some examples, the intermediary 113 stores data and/or documents within the data store 130 (e.g., grounding contexts 132). For example, the intermediary 113 may store document contexts, user contexts, textual contexts, or other suitable information in the data store 130. Storing the data and/or documents relieves the user from having to manage which instance of the GNNM 118 has been provided with which data and/or documents. Moreover, the data and/or documents may be provided to the GNNM 118 over different generation sessions of the GNNM 118. Generally, an instance of the GNNM 118 does not permanently store data received within a generation session, such as a chat session with a chatbot interface of the GNNM 118. Storing the data and/or documents improves consistency in the output provided by the GNNM 118, reducing time needed by the user to generate and modify a document. Moreover, use of the stored data and/or documents (e.g., the grounding contexts) may reduce a number of interactions with the GNNM 118 used by the user during generation of the document, reducing signaling to the GNNM 118 and processing resources used by the GNNM 118.

Advantageously, the grounding contexts (document context, user context, textual context) may be displayed to the user via the GUI 200, for example, as a text document. Moreover, the user may provide user inputs via the GUI 200 to modify the grounding contexts, for example, to revise or update information, add new information, etc. The intermediary 113 may then store the updated grounding contexts for later use (e.g., when generating prompts by the prompt processor 114).

Although the description herein refers to a single user, the features of the system 100 described herein are applicable to two, three, or more users that collaborate on documents and/or share grounding contexts. In some examples, a grounding context such as a textual context is shared among multiple users. In other examples, each user is associated with a separate textual context. In one such example, a textual context may be modified and used by a first user, but a second user may be restricted to use only (i.e., read-only access to the textual context). Other variations on permissions and/or use of the grounding contexts will be apparent to those skilled in the art.

As described above, the GNNM 118 is a neural network model configured to generate an output based on prompts from the intermediary 113. The generated output may be text, images, videos, or a combination thereof. In some examples, the GNNM 118 is implemented as a large language model (LLM) that processes prompts and inputs and provides a text-based output. For example, the GNNM 118 is configured to process prompts or inputs that have been written in natural language or suitable text data format, or may also process prompts containing programming language code, scripting language code, text (formatted or plain text), pseudo-code, XML, HTML, JSON, images, videos, etc. Examples of the LLM include OpenAI Generative Pre-trained Transformer (GPT), Big Science Large Open-science Open-access Multilingual Language Model (BLOOM), Large Language Model Meta AI (LlaMA) 2, Google Pathways Language Model (PaLM) 2, Google Gemini, or another suitable LLM.

In some examples, the GNNM 118 may be implemented as a transformer model (e.g., Generative Pretrained Transformer), for example, or other suitable model. In other examples, the GNNM 118 is configured for image generation and may be implemented as a diffusion model (e.g., Stable Diffusion), generative adversarial network (e.g., StyleGAN), neural style transfer model, large language model modified for image generation (e.g., DALL-E, Midjourney), or other suitable generative neural network model.

Although only one instance of the GNNM 118 is shown for clarity, the computing device 110 may comprise two, three, or more instances of the GNNM 118 to provide various processing tasks, such as document drafting assistance, image drafting assistance, or other suitable tasks. Although the GNNM 118 is shown as part of the computing device 110, instances of the GNNM 118 may be implemented on the computing device 120, the data store 130, a standalone computing device (not shown), a distributed computing device (e.g., cloud service), or other suitable processor.

In some examples, the interface processor 112 that provides the GUI 200 is located remotely from the intermediary 113 and/or the GNNM 118. For example, the computing device 120 may be a desktop computer, PC (personal computer), smartphone, or tablet having an interface processor 122 that generally corresponds to the interface processor 112.

The interface processor 112, the prompt processor 114, and the context processor 116 may be implemented as software modules, application specific integrated circuits (ASICs), firmware modules, or other suitable implementations, in various embodiments. The data store 130 may be implemented as one or more of any type of storage mechanism, including a magnetic disc (e.g., in a hard disk drive), an optical disc (e.g., in an optical disk drive), a magnetic tape (e.g., in a tape drive), a memory device such as a random access memory (RAM) device, a read-only memory (ROM) device, etc., and/or any other suitable type of storage medium.

Fig. 2 shows a diagram of an example graphical user interface (GUI) 200 provided by the system of Fig. 1 for textual context generation, according to an example aspect. The GUI 200 comprises a context sidebar 210 and an editing window 220. Generally, the context sidebar 210 provides a listing of documents 212 and/or grounding contexts 214 that are available to the user. In the example shown in Fig. 2, the grounding contexts 214 include a user context ("me"), textual contexts ("Dr. Jan Swanson", "Dr. Kenny Aggerby", and "Samantha Fortune"), and document contexts ("Instructions", "Mental_Health_Apps").

Generally, the editing window 220 displays content of a document during an editing session of the document for the user. In some examples, the editing session begins when a user opens a document for viewing or modification and ends when the user closes the document. In some examples, the document may remain open and the editing session remains active even when the document is not actively displayed, such as when the editing window 220 loses focus (e.g., another application has taken control of user inputs), or the document is moved to a background tab (not shown) within the GUI 200. In addition to documents, the editing window 220 may display grounding contexts (e.g., user contexts, document contexts, textual contexts). As described above, the editing window 220 shown in Fig. 2 displays a profile 222 of a textual context for "Dr. Jan Swanson". The user may modify the profile 222 by typing directly within the editing window, pasting text or images, or providing other suitable user input.

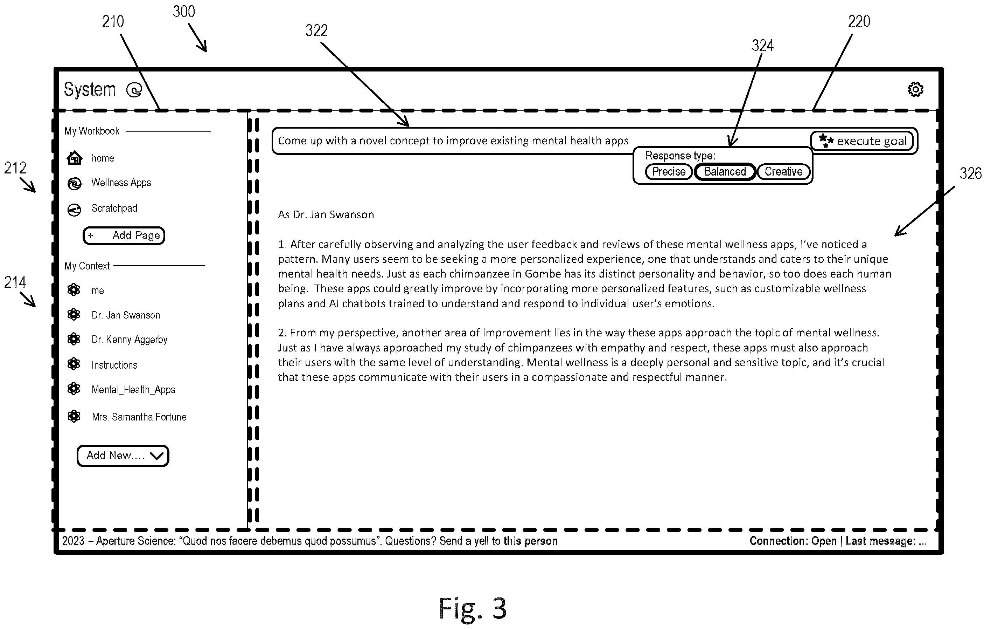

Fig. 3 shows a diagram of an example graphical user interface 300 provided by the system of Fig. 1 for document modification, according to an example embodiment. The GUI 300 generally corresponds to the GUI 200 and shows that the user has selected the "Wellness apps" document and provided a user input of "Come up with a novel concept to improve existing mental wellness apps" within a task prompt 322. The task prompt 322 may be generated and displayed by the interface processor 112 in response to another user input, such as a button press, hotkey press, slash command or "hashtag" sequence (e.g., by the user typing an escape key followed by a predetermined identifier, such as "#task"), or other suitable user interaction with the GUI 300.

The task prompt 322 may include a response menu 324 that provides selectable options for tailoring an output of the GNNM 118. In the example shown in Fig. 3, the selectable options include "Precise", "Balanced", and "Creative". The selectable options generally correspond to additional prompts or information (e.g., grounding contexts) to be provided to the GNNM 118 that adjust a style, format, structure, or other suitable characteristic of the output to be generated by the GNNM 118. In the example shown in Fig. 3, the selectable options represent a temperature hyperparameter of the GNNM 118, where a higher value of the temperature hyperparameter (corresponding to "Creative") makes the output more creative and diverse, but more likely to drift from the prompt, and a lower value (corresponding to "Precise" makes the output more deterministic and less creative. In another example, the selectable options correspond to the textual contexts within the grounding contexts 214. For example, a first option may correspond to the Dr. Kenny Aggerby textual context, a second option may correspond to the Dr. Jan Swanson textual context, and a third option may correspond to the Samantha Fortune textual context. In the example shown in Fig. 3, the Balanced option is selected and the prompt processor 114 generates a suitable prompt for the GNNM 118. In some examples, the response menu 324 provides options for selection of both a textual context and a temperature hyperparameter to be used with the textual context. As described above, the prompt may be based upon one or more of the user inputs within the task prompt 322, the selected option from the response menu 324, a selected textual context (e.g., the textual context for Dr. Jan Swanson), existing content within a document, or other grounding contexts 214.

The prompt processor 114 provides the generated prompt to the GNNM 118, which generates a corresponding output shown as document content 326. In the example shown in Fig. 3, the output is provided to the interface processor 112 for display within the editing window 220 as the document content 326. In some examples, the prompt processor 114 may further process the output before providing the document content 326 to the interface processor 112. In one example, the prompt processor 114 performs formatting changes to the output, such as font changes, display styles, etc. Formatting changes may be performed by inserting markup language (e.g., XML, HTML) inline into the output, or by generating a suitable data structure that identifies formatting changes to be applied by the interface processor 112. In another example, the prompt processor 114 combines the output from the GNNM 118 with other data or information, such as previously obtained outputs from the GNNM 118, outputs from a different instance of the GNNM 118, portions of the grounding contexts 214, or other suitable information. In one such example, the prompt processor 114 combines a text output from an LLM with an image generated by a StyleGAN and provides the combined text output and image to the interface processor 112.

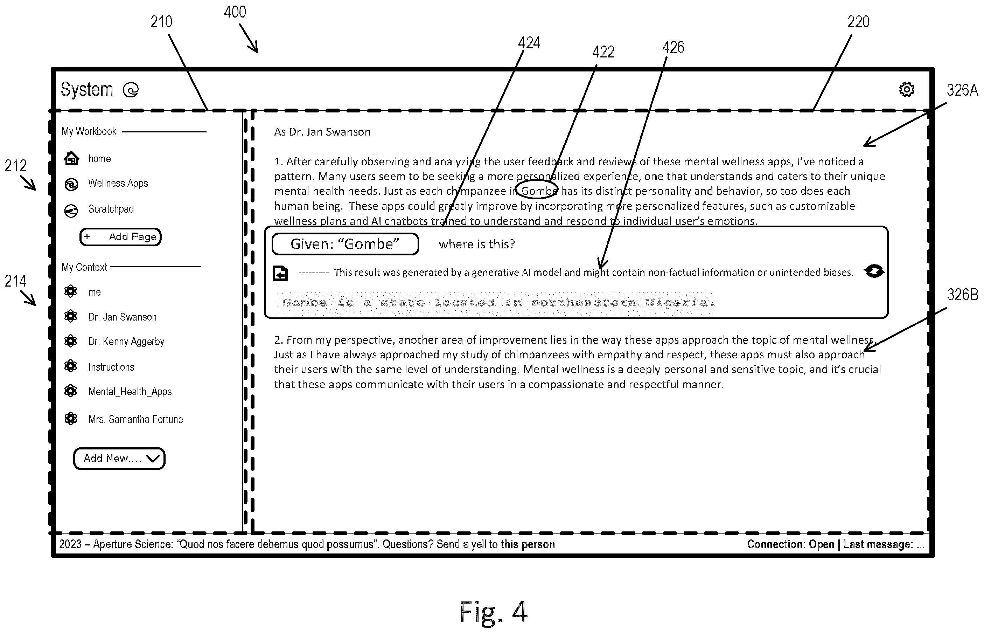

Fig. 4 shows a diagram of an example graphical user interface 400 provided by the system of Fig. 1 for inline interaction with the generative neural network model, according to an aspect. The GUI 400 generally corresponds to the GUI 300 and shows that the user has selected a portion 422 of the document content 326 and, via a suitable user input in the GUI 400, caused the interface processor 112 to generate an inline interaction window 424. In some examples, the inline interaction window 424 is an editing sub-window within the editing window 220 that facilitates a prompt to, and output from, the GNNM 118, where the output is based on the selected portion 422 of the document content 326. The inline interaction window 424 is displayed inline with the document content 326, between a first portion 326A and a second portion 326B, to improve visibility and useability of the inline interaction window 424. Moreover, the inline interaction window 424 is configured to provide an asynchronous connection to the GNNM 118, where generating a prompt, sending the prompt to the GNNM 118, and receiving the output may occur while the user is still within a same editing session of the document content 326.

Within the inline interaction window 424, the interface processor 112 provides the selected portion 422 ("Given: Gombe") and the user may provide further user inputs to request assistance with the selected portion 422 from the GNNM 118. In the example shown in Fig. 4, the user provides a user input of "where is this?", the prompt processor 114 generates and sends a suitable prompt to the GNNM 118, and a corresponding output 426 from the GNNM 118 is provided to the interface processor 112 for display within the inline interaction window 424. In some examples, the inline interaction window 424 is configured to allow multiple user inputs, such as follow-up questions related to the selected portion 422 or the output 426, to obtain additional outputs from the GNNM 118 for display within the inline interaction window 424. Since the interaction with the GNNM 118 is contained within the document content 326, as opposed to requiring the user to switch to a different interface (e.g., a standalone chat window), the GUI 400 provides improved context and visualization for the document content 326. In one example, the output 426 within the inline interaction window 424 is text-based, so the user may select all or a portion of the output 426 for merging into the document content 326. In another example, the output 426 may be discarded and the inline interaction window 424 closed so that the portions 326A and 326B are rejoined.

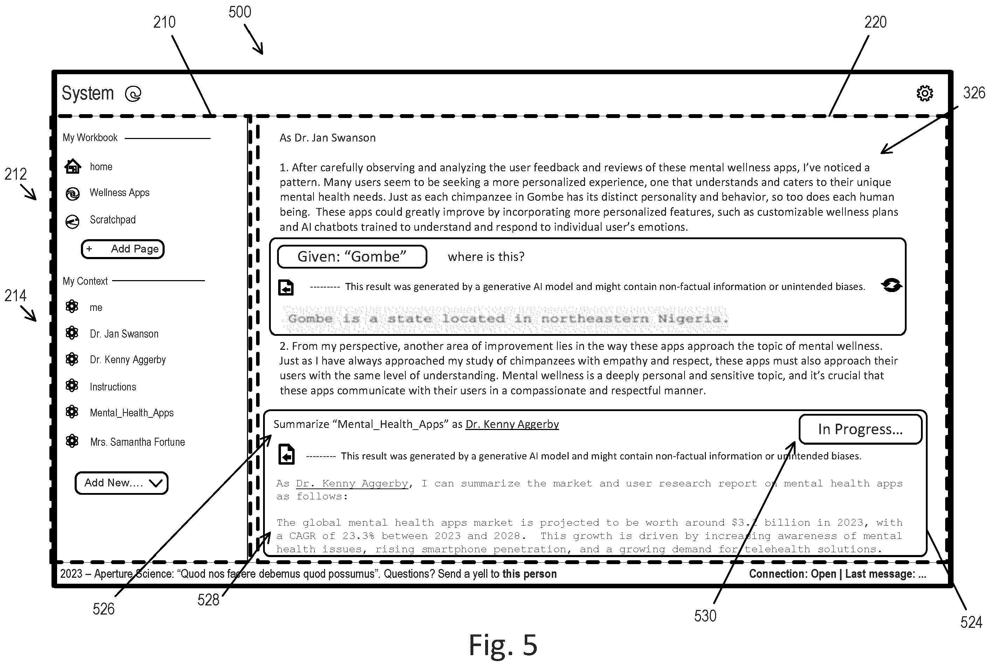

Fig. 5 shows a diagram of an example graphical user interface 500 provided by the system of Fig. 1 for document modification, according to an aspect. The GUI 500 generally corresponds to the GUI 400 and shows that the user has provided a user input 526 that requests drafting assistance from the GNNM 118, specifically, to summarize the grounding context "Mental_Health_Apps" using the textual context of Dr. Kenny Aggerby. In other examples, the drafting assistance may be related to requesting a critique of existing document content, an expansion of the existing document content, revisions to a portion in a desired style or to more closely align with a desired goal, identifying a list of conceptual gaps in the document content, or other suitable requests. In still other examples, the drafting assistance may be related to management of a creative process for drafting and revising a document. In other words, the prompt processor 114 may facilitate problem decomposition, idea organization, idea evaluation, generation of new ideas, pruning of existing ideas, etc. through the use of various prompts. As described above, the prompt processor 114 may generate a suitable prompt for a request for drafting assistance using grounding contexts 214, such as textual contexts, user context, document context, and/or prompt templates. The prompt processor 114 may select a suitable prompt template, from a library of prompt templates based on the user inputs, for critique of a document, generation of a "to do list" of sub-tasks for a given task, or other processes. In some examples, the generated list of sub-tasks is used to provide a stored record of the process for generation of a document, allowing the user to more efficiently manage the generation process, understand milestones and completion, etc.

The interface processor 112 generates an inline interaction window 524 in response to the user input 526. In a similar manner as the inline interaction window 424, the inline interaction window 524 is configured to provide an asynchronous connection to the GNNM 118, where generating a prompt, sending the prompt to the GNNM 118, and receiving the output may occur while the user is still within a same editing session of the document content 326. Moreover, the inline interaction window 524 is displayed inline with the document content 326.

Generally, a generation session for outputs from the GNNM 118 may take as little as a few seconds to be generated, but may also take tens of seconds, or even minutes for generation of longer text outputs. In the case of images as outputs (e.g., using a diffusion model as the GNNM 118), tens of minutes or even hours of generation time may be needed by the GNNM 118. In the example shown in Fig. 5, the prompt processor 114 provides an output 528 from the GNNM 118 as the output 528 is received from the GNNM 118. For example, as additional sub-portions of the output 528 (e.g., words, paragraphs, tokens, lines or tiles of an image) are received by the prompt processor 114, the prompt processor 114 provides the additional sub-portions to the interface processor 112 for display within the inline interaction window 524. During the generation session, the inline interaction window 524 may include a status indicator 530 that provides an indication of progress by the GNNM 118 for generation of the output 528. Since the inline interaction window 524 provides an asynchronous connection to the GNNM 118, the user may still modify or view other portions of the document content 326 during the generation session of the GNNM 118, which reduces unproductive waiting times for the user and reduces an amount of time needed to generate and modify the document.

In some examples, the inline interaction window 524 displays every sub-portion of the output 528 as the sub-portion is provided by the GNNM 118. Although the interface processor 112 may increase a size of the inline interaction window 524 to accommodate the output 528, this may create an unnatural break or gap in the document content 326. In other examples, the interface processor 112 generates the inline interaction window 524 with a fixed or user-adjustable size (e.g., window height) and displays only a limited portion of the output 528, or allows for scrolling within the inline interaction window 524.

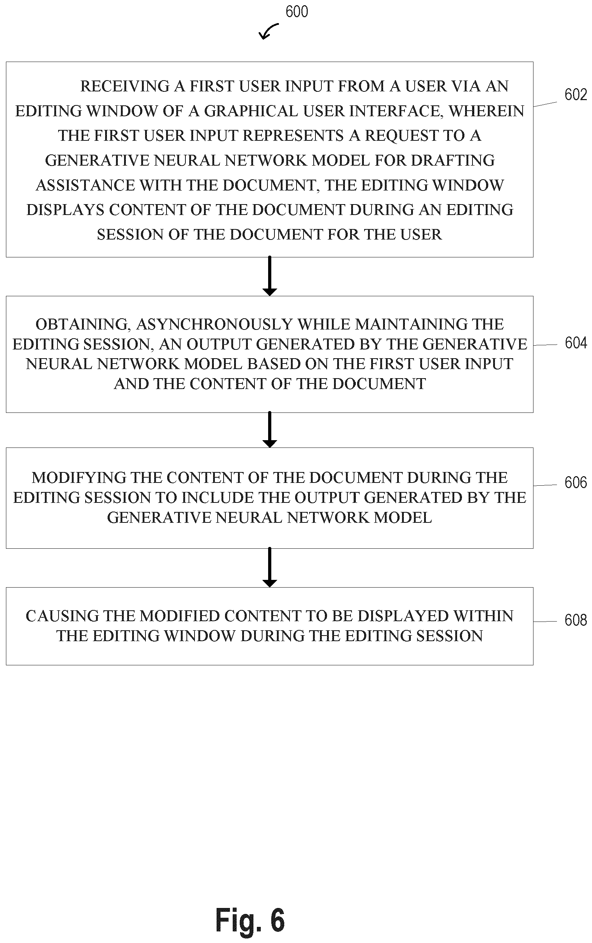

Fig. 6 shows a flowchart of an example method 600 of modifying a document, according to an aspect. Technical processes shown in these figures will be performed automatically unless otherwise indicated. In any given embodiment, some steps of a process may be repeated, perhaps with different parameters or data to operate on. Steps in an embodiment may also be performed in a different order than the top-to-bottom order that is laid out in Fig. 6. Steps may be performed serially, in a partially overlapping manner, or fully in parallel. Thus, the order in which steps of method 600 are performed may vary from one performance to the process of another performance of the process. Steps may also be omitted, combined, renamed, regrouped, be performed on one or more machines, or otherwise depart from the illustrated flow, provided that the process performed is operable and conforms to at least one claim. The steps of Fig. 6 may be performed by the computing device 110 (e.g., via the interface processor 112, the prompt processor 114, the context processor 116), the computing device 120 (e.g., via the interface processor 122), or other suitable computing device.

Method 600 begins with step 602. At step 602, a first user input is received from a user via an editing window of a graphical user interface. The editing window may correspond to the editing window 220 of the GUI 200, for example. The first user input may correspond to the user input within the task prompt 322, the user input within the inline interaction window 424, or the user input within the inline interaction window 524, for example. The first user input represents a request to a generative neural network model for drafting assistance with the document. The generative neural network model may correspond to the GNNM 118, for example. The editing window displays content (e.g., document content 326) of the document during an editing session of the document for the user.

At step 604, an output generated by the generative neural network model based on the first user input and the content of the document is asynchronously obtained while maintaining the editing session.

At step 606, the content of the document is modified during the editing session to include the output generated by the generative neural network model. For example, the prompt processor 114 may modify a document within the listing of documents 212 to include the document content 326, the output 426, or the output 528. In some examples, step 606 further comprises formatting the output generated by the generative neural network model to match a writing style of existing content within the document. For example, the prompt processor 114 may change formatting or paragraph structures of an output from the GNNM 118 to more closely align with the formatting and structure of existing content within the document.

At step 608, the modified content is caused to be displayed within the editing window during the editing session. For example, the interface processor 112 displays the document content 326 within the editing window 220.

As described above, step 604 for asynchronously obtaining the output may include generating a prompt, sending the prompt to the generative neural network model, and receiving the output generated by the generative neural network model. For example, the prompt processor 114 may generate the prompt using the first user input, the content of the document (e.g., from the listing of documents 212), and at least one grounding context, such as grounding contexts 214.

In some examples, the method 600 further comprises receiving a second user input from the user via the graphical user interface where the second user input identifies a textual context for the generative neural network model as the at least one grounding context, and the textual context is a description in a natural language format of a simulated perspective for output generation by the generative neural network model. The textual context may correspond to textual contexts generated or managed by the context processor 116, as described above. In one example, the second user input may indicate a selection of a textual context, as described above. In another example, the second user input includes a text description that defines the textual context in a natural language format (e.g., a user manually typing or otherwise entering a text description of the textual context). In yet another example, the second user input causes the context processor 116 to generate the textual context using the generative neural network model 118.

In some examples, the method 600 further comprises receiving a second user input from the user via the editing window during the editing session where the second user input represents a change in the content of the document. For example, the user may continue editing portions of the document content 326 (e.g., adding content, deleting content, formatting content) while the GNNM 118 generates the output 528. The content of the document may be modified during the editing session to include the change in the content while the output is asynchronously obtained.

The method 600 may further comprise generating an editing sub-window within the graphical user interface as a placeholder for the output generated by the generative neural network model. For example, the editing sub-window may correspond to the inline interaction window 524 generated by the interface processor 112. In some examples, the editing sub-window is dynamically updated to display received sub-portions of the output generated by the generative neural network model. In some examples, the output generated by the generative neural network model is merged from the editing sub-window into the content displayed in the editing window. The editing sub-window may be displayed within the editing window and inline with the content of the document, as described above.

In various examples, the output generated by the generative neural network model comprises one or more of source code, object notation, plain text. In one such example, the editing window is a text editing window and the generative neural network model is a large language model. In other examples, the output generated by the generative neural network model is an image portion. In one such example, the editing window is an image editing window and the generative neural network model is one of a generative adversarial network, a variational autoencoder, a diffusion model, or a text-to-image model.

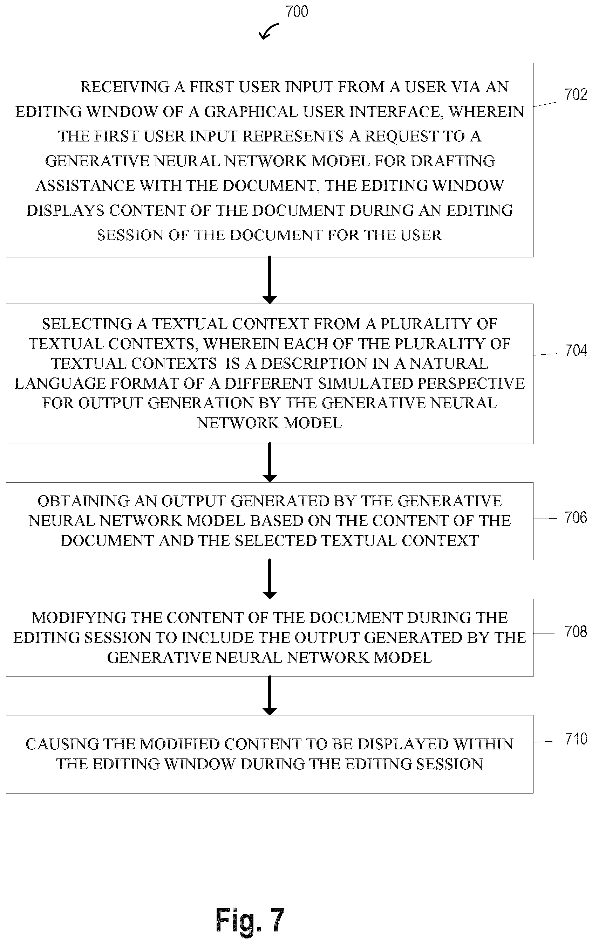

Fig. 7 shows a flowchart of another example method 700 of modifying a document, according to an aspect. Technical processes shown in these figures will be performed automatically unless otherwise indicated. In any given embodiment, some steps of a process may be repeated, perhaps with different parameters or data to operate on. Steps in an embodiment may also be performed in a different order than the top-to-bottom order that is laid out in Fig. 7. Steps may be performed serially, in a partially overlapping manner, or fully in parallel. Thus, the order in which steps of method 700 are performed may vary from one performance to the process of another performance of the process. Steps may also be omitted, combined, renamed, regrouped, be performed on one or more machines, or otherwise depart from the illustrated flow, provided that the process performed is operable and conforms to at least one claim. The steps of Fig. 7 may be performed by the computing device 110 (e.g., via the interface processor 112, the prompt processor 114, the context processor 116), the computing device 120 (e.g., via the interface processor 122), or other suitable computing device.

Method 700 begins with step 702. At step 702, a first user input is received from a user via an editing window of a graphical user interface. The first user input represents a request to a generative neural network model for drafting assistance with the document, and the editing window displays content of the document during an editing session of the document for the user. The editing window may correspond to the editing window 220 of the GUI 200, for example. The first user input may correspond to the user input within the task prompt 322, the user input within the inline interaction window 424, or the user input within the inline interaction window 524, for example. The generative neural network model may correspond to the GNNM 118, for example.

At step 704, a textual context is selected from a plurality of textual contexts, where each of the plurality of textual contexts is a description in a natural language format of a different textual style for output generation by the generative neural network model. The plurality of textual contexts may correspond to the textual contexts identified in the grounding contexts 214, for example.

At step 706, an output generated by the generative neural network model based on the content of the document and the selected textual context is obtained. In some examples, the prompt processor 114 generates a suitable prompt, for example, based on the document content 326 and a selected textual context (e.g., corresponding to profile 222). The prompt processor 114 provides the prompt to the GNNM 118 and obtains a corresponding output (e.g., output 426 or output 528).

At step 708, the content of the document is modified during the editing session to include the output generated by the generative neural network model. For example, the prompt processor 114 may modify a document within the listing of documents 212 to include the document content 326, the output 426, or the output 528.

At step 710, the modified content is caused to be displayed within the editing window during the editing session. For example, the prompt processor 114 causes the interface processor 112 to display the document content 326 within the editing window 220.

In some examples, the method 700 further includes generating a first textual context of the plurality of textual contexts based on the content of the document using the generative neural network model. In one example, the first textual context is displayed within the editing window during the editing session and the first textual context is modified, before obtaining the output, based on a second user input received via the editing window during the editing session. For example, the user may modify the profile 222 for the textual context of Dr. Jan Swanson and the modified profile may be used by the prompt processor 114 to obtain the output from the GNNM 118. In other examples, the first textual context is generated by receiving a corresponding description as a second user input via the editing window during the editing session. For example, the user may manually type in a text description of a textual context.

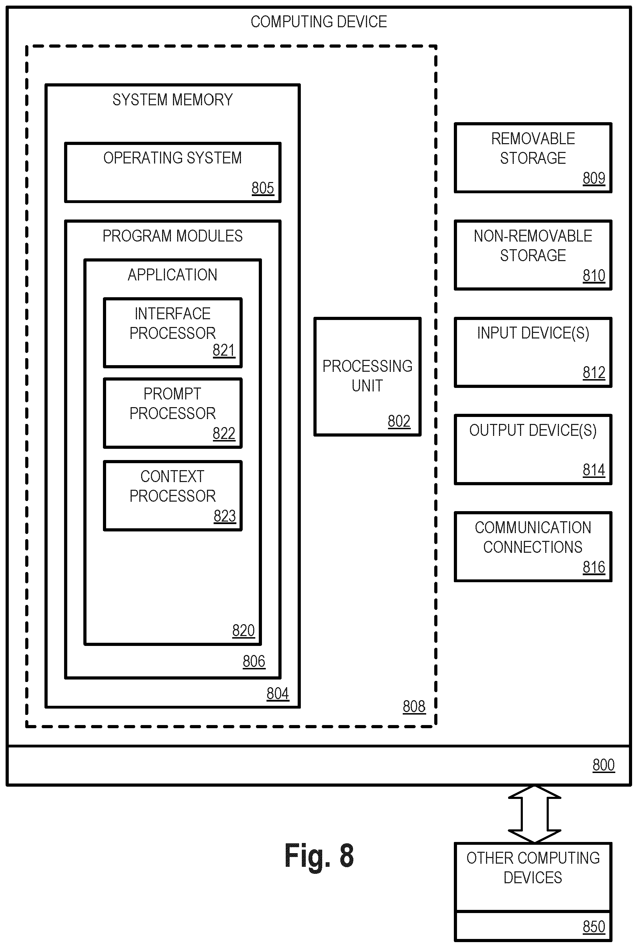

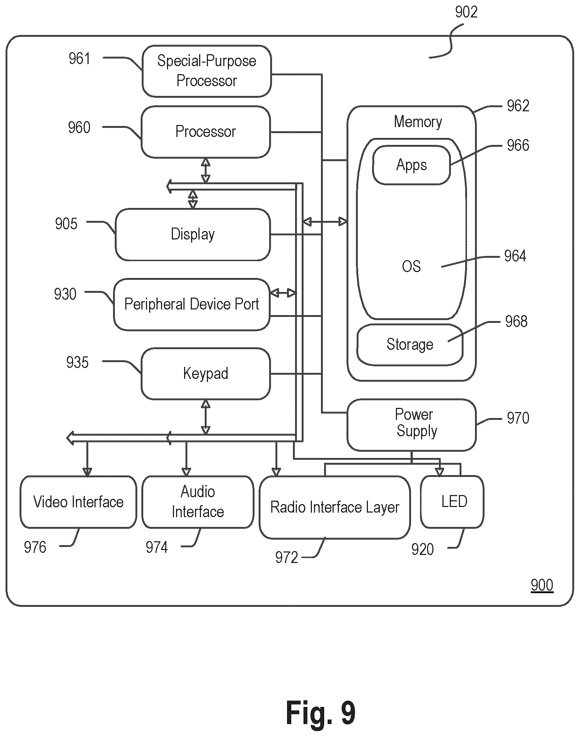

Figs. 8 and 9 and the associated descriptions provide a discussion of a variety of operating environments in which aspects of the disclosure may be practiced. However, the devices and systems illustrated and discussed with respect to Figs. 8 and 9 are for purposes of example and illustration and are not limiting of a vast number of computing device configurations that may be utilized for practicing aspects of the disclosure, as described herein.

Fig. 8 is a block diagram illustrating physical components (e.g., hardware) of a computing device 800 with which aspects of the disclosure may be practiced. The computing device components described below may have computer executable instructions for implementing a document processing application 820 on a computing device (e.g., computing device 110), including computer executable instructions for document processing application 820 that can be executed to implement the methods disclosed herein. In a basic configuration, the computing device 800 may include at least one processing unit 802 and a system memory 804. Depending on the configuration and type of computing device, the system memory 804 may comprise, but is not limited to, volatile storage (e.g., random access memory), non-volatile storage (e.g., read-only memory), flash memory, or any combination of such memories. The system memory 804 may include an operating system 805 and one or more program modules 806 suitable for running document processing application 820, such as one or more components with regard to Fig. 1 and, in particular, interface processor 821 (e.g., corresponding to interface processor 112), prompt processor 822 (e.g., corresponding to prompt processor 114), and/or context processor 823 (e.g., corresponding to context processor 116).

The operating system 805, for example, may be suitable for controlling the operation of the computing device 800. Furthermore, embodiments of the disclosure may be practiced in conjunction with a graphics library, other operating systems, or any other application program and is not limited to any particular application or system. This basic configuration is illustrated in Fig. 8 by those components within a dashed line 808. The computing device 800 may have additional features or functionality. For example, the computing device 800 may also include additional data storage devices (removable and/or non-removable) such as, for example, magnetic disks, optical disks, or tape. Such additional storage is illustrated in Fig. 8 by a removable storage device 809 and a non-removable storage device 810.

As stated above, a number of program modules and data files may be stored in the system memory 804. While executing on the processing unit 802, the program modules 806 (e.g., document processing application 820) may perform processes including, but not limited to, the aspects, as described herein. Other program modules that may be used in accordance with aspects of the present disclosure, and in particular for modifying a document, may include interface processor 821, prompt processor 822, and context processor 823.

Furthermore, embodiments of the disclosure may be practiced in an electrical circuit comprising discrete electronic elements, packaged or integrated electronic chips containing logic gates, a circuit utilizing a microprocessor, or on a single chip containing electronic elements or microprocessors. For example, embodiments of the disclosure may be practiced via a system-on-a-chip (SOC) where each or many of the components illustrated in Fig. 8 may be integrated onto a single integrated circuit. Such an SOC device may include one or more processing units, graphics units, communications units, system virtualization units and various application functionality all of which are integrated (or "burned") onto the chip substrate as a single integrated circuit. When operating via an SOC, the functionality, described herein, with respect to the capability of client to switch protocols may be operated via application-specific logic integrated with other components of the computing device 800 on the single integrated circuit (chip). Embodiments of the disclosure may also be practiced using other technologies capable of performing logical operations such as, for example, AND, OR, and NOT, including but not limited to mechanical, optical, fluidic, and quantum technologies. In addition, embodiments of the disclosure may be practiced within a general-purpose computer or in any other circuits or systems.

The computing device 800 may also have one or more input device(s) 812 such as a keyboard, a mouse, a pen, a sound or voice input device, a touch or swipe input device, etc. The output device(s) 814 such as a display, speakers, a printer, etc. may also be included. The aforementioned devices are examples and others may be used. The computing device 800 may include one or more communication connections 816 allowing communications with other computing devices 850. Examples of suitable communication connections 816 include, but are not limited to, radio frequency (RF) transmitter, receiver, and/or transceiver circuitry; universal serial bus (USB), parallel, and/or serial ports.

The term computer readable media as used herein may include computer storage media. Computer storage media may include volatile and nonvolatile, removable and non-removable media implemented in any method or technology for storage of information, such as computer readable instructions, data structures, or program modules. The system memory 804, the removable storage device 809, and the non-removable storage device 810 are all computer storage media examples (e.g., memory storage). Computer storage media may include RAM, ROM, electrically erasable read-only memory (EEPROM), flash memory or other memory technology, CD-ROM, digital versatile disks (DVD) or other optical storage, magnetic cassettes, magnetic tape, magnetic disk storage or other magnetic storage devices, or any other article of manufacture which can be used to store information and which can be accessed by the computing device 800. Any such computer storage media may be part of the computing device 800. Computer storage media does not include a carrier wave or other propagated or modulated data signal.

Communication media may be embodied by computer readable instructions, data structures, program modules, or other data in a modulated data signal, such as a carrier wave or other transport mechanism, and includes any information delivery media. The term "modulated data signal" may describe a signal that has one or more characteristics set or changed in such a manner as to encode information in the signal. By way of example, and not limitation, communication media may include wired media such as a wired network or direct-wired connection, and wireless media such as acoustic, radio frequency (RF), infrared, and other wireless media.

Fig. 9 is a block diagram illustrating the architecture of one aspect of a computing device 900. That is, the computing device 900 can incorporate a system (e.g., an architecture) 902 to implement some aspects. In one embodiment, the system 902 is implemented as a "smart phone" capable of running one or more applications (e.g., browser, e-mail, calendaring, contact managers, messaging clients, games, and media clients/players). In some aspects, the system 902 is integrated as a computing device, such as an integrated personal digital assistant (PDA) and wireless phone. The system 902 may include a display 905 (analogous to display 905), such as a touch-screen display or other suitable user interface. The system 902 may also include an optional keypad 935 (analogous to keypad 935) and one or more peripheral device ports 930, such as input and/or output ports for audio, video, control signals, or other suitable signals.

The system 902 may include a processor 960 coupled to memory 962, in some examples. The system 902 may also include a special-purpose processor 961, such as a neural network processor. One or more application programs 966 may be loaded into the memory 962 and run on or in association with the operating system 964. Examples of the application programs include phone dialer programs, e-mail programs, personal information management (PIM) programs, word processing programs, spreadsheet programs, Internet browser programs, messaging programs, and so forth. The system 902 also includes a non-volatile storage area 968 within the memory 962. The non-volatile storage area 968 may be used to store persistent information that should not be lost if the system 902 is powered down. The application programs 966 may use and store information in the non-volatile storage area 968, such as email or other messages used by an email application, and the like. A synchronization application (not shown) also resides on the system 902 and is programmed to interact with a corresponding synchronization application resident on a host computer to keep the information stored in the non-volatile storage area 968 synchronized with corresponding information stored at the host computer.

The system 902 has a power supply 970, which may be implemented as one or more batteries. The power supply 970 may further include an external power source, such as an AC adapter or a powered docking cradle that supplements or recharges the batteries.

The system 902 may also include a radio interface layer 972 that performs the function of transmitting and receiving radio frequency communications. The radio interface layer 972 facilitates wireless connectivity between the system 902 and the "outside world," via a communications carrier or service provider. Transmissions to and from the radio interface layer 972 are conducted under control of the operating system 964. In other words, communications received by the radio interface layer 972 may be disseminated to the application programs 966 via the operating system 964, and vice versa.

The visual indicator 920 may be used to provide visual notifications, and/or an audio interface 974 may be used for producing audible notifications via an audio transducer (not shown). In the illustrated embodiment, the visual indicator 920 is a light emitting diode (LED) and the audio transducer may be a speaker. These devices may be directly coupled to the power supply 970 so that when activated, they remain on for a duration dictated by the notification mechanism even though the processor 960 and other components might shut down for conserving battery power. The LED may be programmed to remain on indefinitely until the user takes action to indicate the powered-on status of the device. The audio interface 974 is used to provide audible signals to and receive audible signals from the user. For example, in addition to being coupled to the audio transducer, the audio interface 974 may also be coupled to a microphone to receive audible input, such as to facilitate a telephone conversation. In accordance with embodiments of the present disclosure, the microphone may also serve as an audio sensor to facilitate control of notifications, as will be described below. The system 902 may further include a video interface 976 that enables an operation of peripheral device port 930 (e.g., for an on-board camera) to record still images, video stream, and the like.

A computing device 900 implementing the system 902 may have additional features or functionality. For example, the computing device 900 may also include additional data storage devices (removable and/or non-removable) such as, magnetic disks, optical disks, or tape. Such additional storage is illustrated in Fig. 9 by the non-volatile storage area 968.

Data/information generated or captured by the system 902 may be stored locally, or the data may be stored on any number of storage media that may be accessed by the device via the radio interface layer 972 or via a wired connection between the computing device 900 and a separate computing device associated with the computing device 900, for example, a server computer in a distributed computing network, such as the Internet. As should be appreciated such data/information may be accessed via the computing device 900 via the radio interface layer 972 or via a distributed computing network. Similarly, such data/information may be readily transferred between computing devices for storage and use according to well-known data/information transfer and storage means, including electronic mail and collaborative data/information sharing systems.

As should be appreciated, Fig. 9 is described for purposes of illustrating the present methods and systems and is not intended to limit the disclosure to a particular sequence of steps or a particular combination of hardware or software components.

Alternatively or in addition to the other examples described herein, examples include any combination of the following. One aspect provides a method of modifying a document, the method comprises: receiving a first user input from a user via an editing window of a graphical user interface, wherein the first user input represents a request to a generative neural network model for drafting assistance with the document, the editing window displays content of the document during an editing session of the document for the user; obtaining, asynchronously while maintaining the editing session, an output generated by the generative neural network model based on the first user input and the content of the document; modifying the content of the document during the editing session to include the output generated by the generative neural network model; and causing the modified content to be displayed within the editing window during the editing session. In this aspect, additionally or alternatively, obtaining the output comprises: generating a prompt, for the generative neural network model to generate the output, using the first user input, the content of the document, and at least one grounding context; sending the prompt to the generative neural network model; and receiving the output generated by the generative neural network model. In this aspect, additionally or alternatively, the method further comprises: receiving a second user input from the user via the graphical user interface; wherein: the second user input identifies one or more of a textual context or a document context for the generative neural network model as the at least one grounding context, and the textual context is a description in a natural language format of a simulated perspective for output generation by the generative neural network model. In this aspect, additionally or alternatively, the second user input comprises a text description that defines the textual context in the natural language format. In this aspect, additionally or alternatively, the method further comprises generating the textual context using the generative neural network model based on the second user input. In this aspect, additionally or alternatively, the method further comprises receiving a second user input from the user via the editing window during the editing session, wherein the second user input represents a change in the content of the document; and modifying the content of the document during the editing session to include the change in the content while the output is asynchronously obtained. In this aspect, additionally or alternatively, the method further comprises generating an editing sub-window within the graphical user interface as a placeholder for the output generated by the generative neural network model. In this aspect, additionally or alternatively, the method further comprises dynamically updating the editing sub-window to display received sub-portions of the output generated by the generative neural network model. In this aspect, additionally or alternatively, the method further comprises merging the output generated by the generative neural network model from the editing sub-window into the content displayed in the editing window. In this aspect, additionally or alternatively, the method further comprises displaying the editing sub-window within the editing window and inline with the content of the document. In this aspect, additionally or alternatively, the output generated by the generative neural network model comprises one or more of source code, object notation, plain text; and the editing window is a text editing window and the generative neural network model is a large language model. In this aspect, additionally or alternatively, the output generated by the generative neural network model is an image portion; the editing window is an image editing window; and the generative neural network model is one of a generative adversarial network, a variational autoencoder, a diffusion model, or a text-to-image model. In this aspect, additionally or alternatively, modifying the content of the document during the editing session comprises formatting the output generated by the generative neural network model to match a writing style of existing content within the document.

Another aspect provides a computing device for modifying a document, the computing device comprises a processor and a non-transitory computer-readable memory, wherein the processor is configured to carry out instructions from the memory that configure the computing device to: receive a first user input from a user via an editing window of a graphical user interface, wherein: the first user input represents a request to a generative neural network model for drafting assistance with the document, the editing window displays content of the document during an editing session of the document for the user; obtain, asynchronously while maintaining the editing session, an output generated by the generative neural network model based on the first user input and the content of the document; modify the content of the document during the editing session to include the output generated by the generative neural network model; and cause the modified content to be displayed within the editing window during the editing session. In this aspect, additionally or alternatively, the processor is configured to carry out instructions from the memory that configure the computing device to: generate a prompt, for the generative neural network model to generate the output, using the first user input, the content of the document, and at least one grounding context; send the prompt to the generative neural network model; and receive the output generated by the generative neural network model. In this aspect, additionally or alternatively, the processor is configured to carry out instructions from the memory that configure the computing device to: receive a second user input from the user via the graphical user interface; wherein: the second user input identifies one or more of a textual context and a document context for the generative neural network model as the at least one grounding context; and the textual context is a description in a natural language format of a simulated perspective for output generation by the generative neural network model.

Another aspect provides a method of modifying a document, the method comprises: receiving a first user input from a user via an editing window of a graphical user interface, wherein: the first user input represents a request to a generative neural network model for drafting assistance with the document, the editing window displays content of the document during an editing session of the document for the user; selecting a textual context from a plurality of textual contexts, wherein each of the plurality of textual contexts is a description in a natural language format of a different simulated perspective for output generation by the generative neural network model; obtaining an output generated by the generative neural network model based on the content of the document and the selected textual context; modifying the content of the document during the editing session to include the output generated by the generative neural network model; and causing the modified content to be displayed within the editing window during the editing session. In this aspect, additionally or alternatively, the method further comprises generating a first textual context of the plurality of textual contexts based on the content of the document using the generative neural network model. In this aspect, additionally or alternatively, the method further comprises displaying the first textual context within the editing window during the editing session; and modifying the first textual context, before obtaining the output, based on a second user input received via the editing window during the editing session. In this aspect, additionally or alternatively, the method further comprises generating a first textual context of the plurality of textual contexts by receiving a corresponding description as a second user input via the editing window during the editing session.

The description and illustration of one or more aspects provided in this application are not intended to limit or restrict the scope of the disclosure as claimed in any way. The aspects, examples, and details provided in this application are considered sufficient to convey possession and enable others to make and use the best mode of claimed disclosure. The claimed disclosure should not be construed as being limited to any aspect, example, or detail provided in this application. Regardless of whether shown and described in combination or separately, the various features (both structural and methodological) are intended to be selectively included or omitted to produce an embodiment with a particular set of features. Having been provided with the description and illustration of the present application, one skilled in the art may envision variations, modifications, and alternate aspects falling within the broader aspects of the general inventive concept embodied in this application that do not depart from the broader scope of the claimed disclosure.

## Claims

1. A method (600) of modifying a document, the method comprising:
receiving (602) a first user input from a user via an editing window of a graphical user interface, wherein
the first user input represents a request to a generative neural network model for drafting assistance with the document,
the editing window displays content of the document during an editing session of the document for the user;
obtaining (604), asynchronously while maintaining the editing session, an output generated by the generative neural network model based on the first user input and the content of the document;
modifying (606) the content of the document during the editing session to include the output generated by the generative neural network model; and
causing (608) the modified content to be displayed within the editing window during the editing session.

2. The method of claim 1, wherein obtaining the output comprises:
generating a prompt, for the generative neural network model to generate the output, using the first user input, the content of the document, and at least one grounding context;
sending the prompt to the generative neural network model; and
receiving the output generated by the generative neural network model.

3. The method of claim 2, further comprising:
receiving a second user input from the user via the graphical user interface;
wherein:
the second user input identifies one or more of a textual context or a document context for the generative neural network model as the at least one grounding context, and
the textual context is a description in a natural language format of a simulated perspective for output generation by the generative neural network model.

4. The method of any of the preceding claims, further comprising:
receiving a second user input from the user via the editing window during the editing session, wherein the second user input represents a change in the content of the document; and
modifying the content of the document during the editing session to include the change in the content while the output is asynchronously obtained.

5. The method of any of the preceding claims, further comprising generating an editing sub-window within the graphical user interface as a placeholder for the output generated by the generative neural network model.

6. The method of claim 5, further comprising dynamically updating the editing sub-window to display received sub-portions of the output generated by the generative neural network model.

7. The method of claims 5 or 6, further comprising merging the output generated by the generative neural network model from the editing sub-window into the content displayed in the editing window.

8. The method of any of the claims 5 to 7, further comprising displaying the editing sub-window within the editing window and inline with the content of the document.

9. The method of any of the preceding claims, wherein:
the output generated by the generative neural network model comprises one or more of source code, object notation, plain text; and
the editing window is a text editing window and the generative neural network model is a large language model.

10. The method of any of the preceding claims, wherein:
the output generated by the generative neural network model is an image portion;
the editing window is an image editing window; and
the generative neural network model is one of a generative adversarial network, a variational autoencoder, a diffusion model, or a text-to-image model.

11. The method of any of the preceding claims, wherein modifying the content of the document during the editing session comprises formatting the output generated by the generative neural network model to match a writing style of existing content within the document.

12. A computing device (800) for modifying a document, the computing device (800) comprising a processor (802) and a non-transitory computer-readable memory (804), wherein the processor (802) is configured to carry out instructions from the memory (804) that configure the computing device (800) to:
receive (602) a first user input from a user via an editing window of a graphical user interface, wherein:
the first user input represents a request to a generative neural network model for drafting assistance with the document,
the editing window displays content of the document during an editing session of the document for the user;
obtain (604), asynchronously while maintaining the editing session, an output generated by the generative neural network model based on the first user input and the content of the document;
modify (606) the content of the document during the editing session to include the output generated by the generative neural network model; and
cause (608) the modified content to be displayed within the editing window during the editing session.

13. The computing device of claim 12, wherein the processor is configured to carry out instructions from the memory that configure the computing device to:
generate a prompt, for the generative neural network model to generate the output, using the first user input, the content of the document, and at least one grounding context;
send the prompt to the generative neural network model; and
receive the output generated by the generative neural network model.

14. The computing device of claim 13, wherein the processor is configured to carry out instructions from the memory that configure the computing device to:
receive a second user input from the user via the graphical user interface;
wherein:
the second user input identifies one or more of a textual context and a document context for the generative neural network model as the at least one grounding context; and
the textual context is a description in a natural language format of a simulated perspective for output generation by the generative neural network model.

15. A method (700) of modifying a document, the method comprising:
receiving (702) a first user input from a user via an editing window of a graphical user interface, wherein:
the first user input represents a request to a generative neural network model for drafting assistance with the document,
the editing window displays content of the document during an editing session of the document for the user;
selecting (704) a textual context from a plurality of textual contexts, wherein each of the plurality of textual contexts is a description in a natural language format of a different simulated perspective for output generation by the generative neural network model;
obtaining (706) an output generated by the generative neural network model based on the content of the document and the selected textual context;
modifying (708) the content of the document during the editing session to include the output generated by the generative neural network model; and
causing (710) the modified content to be displayed within the editing window during the editing session.
